# EUROPEAN PATENT APPLICATION

(11) **EP 4 694 266 A1**
(43) Date of publication of application: **11.02.2026**
(21) Application number: 25190868.7
(22) Date of filing: 22.07.2025
(51) Int. Cl.: H04W 12/30, H04W 12/37

(54) **METHOD FOR COMMUNICATION BETWEEN SECURE ELEMENT AND REMOTE ENTITY, SECURE ELEMENT, AND SYSTEM**

(30) Priority: 08.08.2024 IN 202411060067
(71) Applicant: Giesecke+Devrient Mobile Security Germany GmbH, 81677 München (DE)
(72) Inventor: Kulkarni M, Srinivas, 411004 Pune (IN); Pillai, Aakash, 411004 Pune (IN); Patel, Praveen, 411004 Pune (IN)
(74) Representative: Giesecke+Devrient IP

(57) **Abstract**

A method (200) for communication between a secure element (140) and a remote entity (110) comprises receiving (202), by the secure element (140), a request (104) to establish a secure channel session (106) between the secure element (140) and the remote entity (110); establishing (204) the secure channel session (106) between the secure element (140) and the remote entity (110); receiving (206), by the secure element (140), a command script (112) comprising a series of remote management commands (120); sequentially generating (208), by the secure element (140), a series of responses (130) corresponding to the series of remote management commands (120); sequentially storing (210), by the secure element (140), the series of responses (130) in a transmission buffer (150) of the secure element (140); collectively transmitting (212), by the secure element (140), the stored series of responses (130) to the remote entity (110) via the secure channel session (106).

## Description

### Technical field

The present invention relates to a method for communication between a secure element and a remote entity. The invention further relates to a system that is adapted to carry out the method.

### Background

Communicating by means of a terminal, such as a mobile phone or an internet of things (IoT) device, via a communications network generally requires the terminal to be equipped with a secure element (SE) for securely storing data uniquely identifying a user (also called a subscriber) of the terminal. The secure element is in the form of a microprocessor chip, which may store sensitive data and run secure applications intended for multiple use cases, such as, payment, transit, or telecommunication applications.

Once deployed in the field, the terminal and their SEs may require provisions that allow an SE issuer (or an owner of the SE) to update or change data in the SE over-the-air (OTA) without having to reissue new SEs. Specifically, OTA technology provides functionalities for managing directories and files of the SE (also referred to as remote file management or RFM), and for managing applications on the SE (also referred to as remote application management or RAM).

Global platform card technology specification sets up a global standard for cards and/or secure element issuers that shall be implemented on smart cards. The specification defines communication mechanisms between the SE issuer or an off-card entity (OCE) managed by the SE issuer and the SE that provides a certain level of assurance to one or both entities. Communication mechanisms may utilize hypertext transfer protocol secure (HTTPS) and pre-shared key (PSK) transport layer security (TLS) OTA using expanded remote application data format.

Expanded remote application data format provides two variants for command/response script structure. First variant includes data object which uses a definite length coding wherein a complete length of the command/response script is known beforehand. Second variant includes a data object which uses an indefinite length coding wherein the complete length of the command/response script is not known beforehand. Two variants exist for transmission of payload using the HTTP. First variant includes content length encoding wherein an HTTP header is used to indicate a total length of the HTTP Payload. Second variant includes chunked transfer encoding wherein the HTTP header is used to indicate that the HTTP payload is divided into "chunks" and a total length of the HTTP payload not being published.

In RAM using HTTPS mechanism, four combinations of data transmission exist. These are chunked transfer encoding with indefinite length coding, chunked transfer encoding with definite length coding, content length encoding with indefinite length coding, and content length encoding with definite length coding. As per the standard, the variant with chunked transfer encoding and indefinite length coding is recommended to be used for RAM/RFM over HTTPS since a smaller size of random-access memory would be required. However, this variant suffers from low performance since a response is sent in a separate packet corresponding to each command received. This causes excessive packets to be sent between the secure element and a server associated with the SE issuer.

### Summary

The object of the present invention is therefore to take account of the above-mentioned disadvantages and to suggest a method for communication between a secure element and a remote entity. This object is achieved by a method, a secure element, and a system having features of the independent claims. Advantageous embodiments and developments are stated in the dependent claims.

A method for communication between a secure element and a remote entity is provided. A preferred embodiment of the method comprises receiving, by the secure element, a request to establish a secure channel session between the secure element and the remote entity. The method further comprises establishing, by the secure element and the remote entity, the secure channel session between the secure element and the remote entity. The method further comprises receiving, by the secure element, a command script comprising a series of remote management commands. The method further comprises sequentially generating, by the secure element, a series of responses corresponding to the series of remote management commands. Each response from the series of responses is generated after processing a corresponding remote management command from the series of remote management commands. The method further comprises sequentially storing, by the secure element, the series of responses in a transmission buffer of the secure element. The method further comprises collectively transmitting, by the secure element, the stored series of responses to the remote entity via the secure channel session.

The method of the present disclosure allows the series of responses to be sequentially stored in the transmission buffer of the secure element. Further, the stored series of responses are collectively transmitted by the secure element to the remote entity. This may enable an entire response script including the series of responses to be transmitted in a single response packet, thereby reducing a number of packets to be sent by the secure element in response to the received command script having the series of remote management commands. Additionally, this may reduce a transmission time for transmitting the response script. Furthermore, the proposed method may save a network bandwidth and a power consumption of a device associated with the secure element, which may be an important factor for internet-of-things (IoT) devices.

According to an embodiment, sequentially storing the series of responses comprises determining if the transmission buffer is full before storing a last response from the series of responses. Sequentially storing the series of responses further comprises collectively transmitting, by the secure element, one or more responses from the series of responses stored in the transmission buffer via the secure channel session. Thus, in case the transmission buffer is full before storing the last response from the series of responses, the method allows collective transmission of the one or more responses already stored in the transmission buffer.

According to an embodiment, the method further comprises emptying the transmission buffer after collectively transmitting the one or more responses stored in the transmission buffer. This may allow the transmission buffer to subsequently store further responses from the series of responses.

According to an embodiment, the method further comprises sequentially storing, by the secure element, one or more remaining responses from the series of responses in the transmission buffer after emptying the transmission buffer. Thus, the one or more remaining responses from the series of responses may be sequentially stored after emptying the transmission buffer, such that the one or more remaining responses may be collectively transmitted by the secure element.

According to an embodiment, collectively transmitting the stored series of responses comprises collectively transmitting the series of responses after storing a last response from the series of responses in the transmission buffer. Thus, the method may allow the entire response script along with the last response from the series of responses to be transmitted by the secure element in the single response packet.

According to an embodiment, the method further comprises terminating, by the secure element, the secure channel session after collectively transmitting the series of responses. Thus, the method may allow the secure channel session to be terminated upon transmission of the series of responses corresponding to the series of remote management commands.

According to an embodiment, the secure element is one of a universal integrated circuit card (UICC), an embedded universal integrated circuit card (eUICC), and an integrated universal integrated circuit card (iUICC). Thus, the method may be advantageously applied to the UICCs, eUICCs, and iUICCs.

According to an embodiment, the transmission buffer is a volatile memory. Thus, the transmission buffer may provide a fast and efficient access to stored data, thereby enhancing smooth operation.

According to an embodiment, the command script is of indefinite length. Thus, a complete length of the command script may not require to be known beforehand.

According to an embodiment, the command script is received using chunked transfer encoding. Thus, it may not be necessary to generate a full command script before transmitting the command script. This may allow the command script to be received in multiple data packets or "chunks".

According to an embodiment, the secure channel session is established via hypertext transfer protocol secure (HTTPS) or constrained application protocol (CoAP). Accordingly, the secure channel session may allow data encryption in both directions, enabling private and safe data communication.

According to a preferred embodiment, a secure element comprises a transmission buffer configured to store a series of responses. Each response from the series of responses is generated after processing a corresponding remote management command from a series of remote management commands of a command script received from a remote entity.

According to a preferred embodiment, a system comprises a secure element and a remote entity configured to be wirelessly coupled to the secure element. The secure element is configured to perform the steps of the hereinabove described method.

Advantageous embodiments and developments are stated in the dependent claims.

### Brief Description Of Accompanying Drawing

The present invention will hereinafter be described by way of example with reference to the attached drawings. Therein are shown:
Figure 1 a block diagram of a system, according to an embodiment of the invention,
Figure 2 a flowchart depicting various steps of a method for communication between a secure element and a remote entity, according to an embodiment of the invention; and
Figure 3 a block diagram of the system, according to another embodiment of the invention.

### Detailed Description

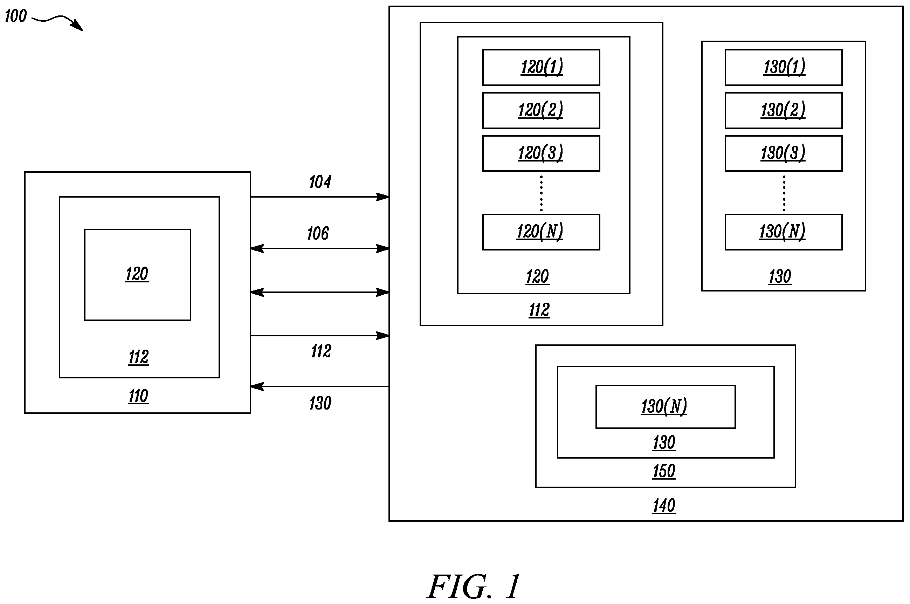

Referring to Figure 1, there is shown a system 100 comprising a secure element 140 and a remote entity 110. In some examples, the remote entity 110 may be an issuer of the secure element 140, which may be a mobile network operator (MNO), for example. In some examples, the secure element 140 may be associated with a terminal (not shown), e.g., a mobile phone, an internet-of-things (IoT) device, etc. In some examples, the secure element 140 may securely store data that uniquely identifies a user of the terminal.

In some examples, the secure element 140 may be in the form of a microprocessor chip that can store sensitive data and run secure applications, such as, payment, transit, or telecommunication applications. In some examples, the secure element 140 is one of a universal integrated circuit card (UICC), an embedded universal integrated circuit card (eUICC), and an integrated universal integrated circuit card (iUICC). For example, the secure element 140 may contain subscriber credentials for authenticating and identifying the user of the terminal (e.g., the mobile phone). The subscription credential may be used to identify and authenticate the user of the terminal to subscribe to an MNO network.

In some examples, the UICC may also be referred to as a plug-in subscriber identity module (SIM), a universal subscriber identity module (U-SIM), a reprogrammable subscriber identity module (R-SIM), and the like. In some examples, the eUICC may also be referred to as an embedded subscriber identity module (eSIM). In some examples, the iUICC may also be referred to as an integrated subscriber identity module (iSIM).

In some examples, the remote entity 110 is configured to be wirelessly coupled to the secure element 140 using a communication network. In some examples, the communication network may include one or more of a wireless network, a wired network, a local area network (LAN), a metropolitan area network (MAN), a wide area network (WAN), a wireless personal area network (WPAN), 802.11, 802.16, 802.20, WiMax networks, a direct connection, such as through a Universal Serial Bus (USB) port, and the like, and may include a set of interconnected networks that make up the Internet. In some examples, the wireless network may include, such as, but not limited to, a cellular network, and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc.

In some examples, the remote entity 110 is configured to update or change data stored in the secure element 140 over-the-air (OTA). OTA technology provides functionalities for updating a directory and files of the secure element 140 (also referred to as remote file management or RFM), and for managing applications on the secure element 140 (also referred to as remote application management or RAM). For example, files on the secure element 140 may be managed, and/or personalized via OTA.

Global platform card technology specification sets up a global standard for secure elements issuers that shall be implemented on smart cards. For example, the RAM/RFM may be performed according to ETSI TS 102 226 [102 226] (smart cards; remote application protocol data unit (APDU) structure for UICC, eUICC, and iUICC based applications).

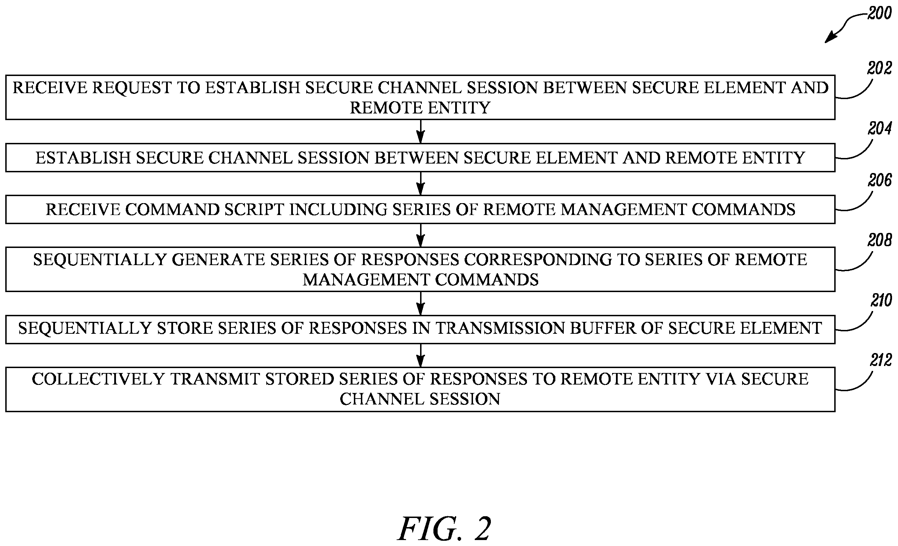

Figure 2 shows a method 200 for communication between the secure element 140 and the remote entity 110 as illustrated in Figure 1 according to a preferred embodiment of the invention. The steps of the method 200 may be carried out by the secure element 140 of Figure 1. Specifically, the secure element 140 is configured to perform the steps of the method 200. The method 200 will be set forth by way of example with reference to Figure 1.

Referring to Figures 1 and 2, in step 202, the method 200 comprises receiving, by the secure element 140, a request 104 to establish a secure channel session 106 between the secure element 140 and the remote entity 110. In some examples, the secure channel session 106 may be established via the communication network. In some examples, the secure channel session 106 may utilize hypertext transfer protocol secure (HTTPS) with pre-shared key (PSK) transport layer security (TLS) as communication architecture.

In step 204, the method 200 further comprises establishing, by the secure element 140 and the remote entity 110, the secure channel session 106 between the secure element 140 and the remote entity 110. In some examples, the secure channel session 106 is established via hypertext transfer protocol secure (HTTPS) or constrained application protocol (CoAP).

In step 206, the method 200 further comprises receiving, by the secure element 140, a command script 112 comprising a series of remote management commands 120(1), 120(2), 120(3), ..., 120(N) (collectively referred to herein as "remote management commands 120"), where N is a natural number corresponding to a total number of the remote management commands 120. In some examples, the remote entity 110 may generate the command script 112 comprising the series of remote management commands 120 for updating a specific file in the secure element 140.

In some examples, the series of remote management commands 120 includes a set of APDU commands (also referred to as C-APDUs). Subsequently, the command script 112 is securely transmitted to the secure element 140 through the secure channel session 106. The secure element 140 may unwrap the command script 112, read, and process each remote management command 120 contained therein.

In some examples, as per the standard, expanded remote application data format may be utilized for the command script 112. In some examples, the expanded remote application data format includes data objects with an indefinite length coding wherein a complete length of the command script 112 is not known beforehand. Thus, the command script 112 is of indefinite length.

Further, for transmission of payload using the HTTPS, chunked transfer encoding may be utilized wherein an HTTP header is used to indicate that the HTTP payload is divided into "chunks" and a total length of the HTTP payload not being published. In other words, the command script 112 is received using chunked transfer encoding. This may allow the command script 112 to be received in multiple data packets or "chunks".

In step 208, the method 200 further comprises sequentially generating, by the secure element 140, a series of responses 130(1), 130(2), 130(3), ..., 130(N) (collectively referred to herein as "responses 130") corresponding to the series of remote management commands 120, where N is the natural number corresponding to the total number of the remote management commands 120.

In some examples, each response 130 from the series of responses 130 may represent a response to an APDU command (also referred to as R-APDUs). In some examples, after receiving each remote management command 120, the secure element 140 may generate the corresponding response 130. Specifically, each response 130 from the series of responses 130 is generated after processing a corresponding remote management command 120 from the series of remote management commands 120. For example, the response 130(1) is generated after processing the remote management command 120(1), the response 130(2) is generated after processing the remote management command 120(2), and so on. Each response 130 may indicate whether a corresponding operation was successful or not and, if applicable, one or more error conditions.

In step 210, the method 200 further comprises sequentially storing, by the secure element 140, the series of responses 130 in a transmission buffer 150 of the secure element 140. In other words, the transmission buffer 150 is configured to store the series of responses 130. In some examples, the transmission buffer 150 may sequentially store the series of responses 130 as each response 130 is generated after processing the corresponding remote management command 120. This may allow reduction in a processing time of the series of remote management command 120.

In some examples, the transmission buffer 150 is a volatile memory. Thus, the transmission buffer 150 may provide a fast and efficient access to stored data, thereby enhancing smooth operation However, other types of memories may also be utilized based on application requirements. As used herein, the term "volatile memory" generally refers to a computer memory that requires power to maintain stored data. The volatile memory may be a multi-time programmable memory.

In step 212, the method 200 further comprises collectively transmitting, by the secure element 140, the stored series of responses 130 (together with an acknowledgment) to the remote entity 110 via the secure channel session 106. In some examples, collectively transmitting the stored series of responses 130 comprises collectively transmitting the series of responses 130 after storing a last response 130(N) from the series of responses 130 in the transmission buffer 150.

Thus, the method 200 may allow the entire response script 130 along with the last response 130(N) from the series of responses 130 to be transmitted by the secure element 140 in a single response packet. This may reduce a number of packets to be sent by the secure element 140 in response to the received command script 112 having the series of remote management commands 120. Additionally, this may reduce a transmission time for transmitting the series of responses 130. Furthermore, the method 200 may save a network bandwidth and a power consumption of the terminal associated with the secure element 140.

In some examples, the method 200 further comprises terminating, by the secure element 140, the secure channel session 106 after collectively transmitting the series of responses 130. Thus, the method 200 may allow the secure channel session 106 to be terminated upon transmission of the series of responses 130 corresponding to the series of remote management commands 120.

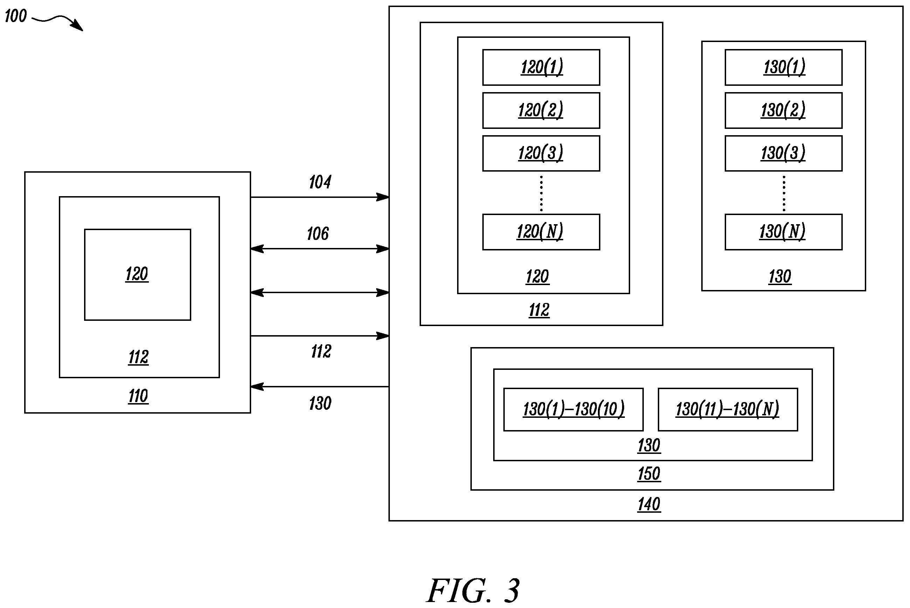

Referring to Figure 3, there is shown the system 100 according to another embodiment of the invention. Referring to Figures 2 and 3, in some examples, sequentially storing the series of responses 130 comprises determining if the transmission buffer 150 is full before storing the last response 130(N) from the series of responses 130.

In some examples, sequentially storing the series of responses 130 further comprises collectively transmitting, by the secure element 140, one or more responses 130 from the series of responses 130 stored in the transmission buffer 150 via the secure channel session 106. For example, if the transmission buffer 150 is full after storing the responses 130(1)-130(10), then the responses 130(1)-130(10) are collectively transmitted by the secure element 140 to the remote entity 110. Thus, in case the transmission buffer 150 is full before storing the last response 130(N) from the series of responses 130, the method 200 may allow collective transmission of the one or more responses 130(1)-130(10) already stored in the transmission buffer 150.

In some examples, the method 200 further comprises emptying the transmission buffer 150 after collectively transmitting the one or more responses 130 stored in the transmission buffer 150. For example, the transmission buffer 150 is emptied after collectively transmitting the responses 130(1)-130(10). This may allow the transmission buffer 150 to subsequently store further responses 130 from the series of responses 130.

In some examples, the method 200 further comprises sequentially storing, by the secure element 140, one or more remaining responses 130 from the series of responses 130 in the transmission buffer 150 after emptying the transmission buffer 150. For example, the one or more remaining responses 130(11)-130(N) are then sequentially stored in the transmission buffer 150 after emptying the transmission buffer 150. In some examples, the method 200 further comprises collectively transmitting, by the secure element 140, the one or more remaining responses 130(11)-130(N) via the secure channel session 106.

In case the transmission buffer 150 is again full before storing the last response 130(N) (shown in Figure 1) from the series of responses 130, the one or more responses 130 stored in the transmission buffer 150 are again collectively transmitted by the secure element 140 and the above process is repeated.

It should be understood that steps of the method 200 is not necessarily presented in any particular order and that performance of some or all the steps in an alternative order(s) is possible and is contemplated. The steps have been presented in the demonstrated order for ease of description and illustration. Further, it should be understood that steps can be added, omitted and/or performed simultaneously without departing from the scope of the appended claims. Moreover, it should also be understood that the illustrated method 200 can be ended at any time.

Referring to Figures 1-3, the system 100 and the method 200 of the present disclosure allows the series of responses 130 to be sequentially stored in the transmission buffer 150 of the secure element 140. Further, the stored series of responses 130 are collectively transmitted by the secure element 140 to the remote entity 110. This may enable an entire response script including the series of responses 130 to be transmitted in a single response packet, thereby reducing a number of packets to be sent by the secure element 140 in response to the received command script 112 having the series of remote management commands 120. Additionally, this may reduce a transmission time for transmitting the response script. Furthermore, the proposed system 100 and method 200 may save a network bandwidth and a power consumption of a device associated with the secure element 140.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

### PART LIST

- 100: System
- 104: Request
- 106: Secure Channel Session
- 110: Remote Entity
- 112: Command Script
- 120: Series of Remote Management Commands
- 130: Series of Responses
- 130(N): Last Response
- 140: Secure Element
- 150: Transmission Buffer
- 200: Method
- 202: Step
- 204: Step
- 206: Step
- 208: Step
- 210: Step
- 212: Step

## Claims

1. A method (200) for communication between a secure element (140) and a remote entity (110), the method (200) comprising:
receiving (202), by the secure element (140), a request (104) to establish a secure channel session (106) between the secure element (140) and the remote entity (110);
establishing (204), by the secure element (140) and the remote entity (110), the secure channel session (106) between the secure element (140) and the remote entity (110);
receiving (206), by the secure element (140), a command script (112) comprising a series of remote management commands (120);
sequentially generating (208), by the secure element (140), a series of responses (130) corresponding to the series of remote management commands (120), wherein each response (130) from the series of responses (130) is generated after processing a corresponding remote management command (120) from the series of remote management commands (120);
sequentially storing (210), by the secure element (140), the series of responses (130) in a transmission buffer (150) of the secure element (140); and
collectively transmitting (212), by the secure element (140), the stored series of responses (130) to the remote entity (110) via the secure channel session (106).

2. The method (200) of claim 1, wherein sequentially storing the series of responses (130) comprises:
determining if the transmission buffer (150) is full before storing a last response (130(N)) from the series of responses (130); and
collectively transmitting, by the secure element (140), one or more responses (130) from the series of responses (130) stored in the transmission buffer (150) via the secure channel session (106).

3. The method (200) of claim 2, further comprising emptying the transmission buffer (150) after collectively transmitting the one or more responses (130) stored in the transmission buffer (150).

4. The method (200) of claim 3, further comprising sequentially storing, by the secure element (140), one or more remaining responses (130) from the series of responses (130) in the transmission buffer (150) after emptying the transmission buffer (150).

5. The method (200) of claim 1, wherein collectively transmitting the stored series of responses (130) comprises collectively transmitting the series of responses (130) after storing a last response (130(N)) from the series of responses (130) in the transmission buffer (150).

6. The method (200) of claim 5, further comprising terminating, by the secure element (140), the secure channel session (106) after collectively transmitting the series of responses (130).

7. The method (200) of claim 1, wherein the secure element (140) is one of a universal integrated circuit card (UICC), an embedded universal integrated circuit card (eUICC), and an integrated universal integrated circuit card (iUICC).

8. The method (200) of claim 1, wherein the transmission buffer (150) is a volatile memory.

9. The method (200) of claim 1, wherein the command script (112) is of indefinite length.

10. The method (200) of claim 1, wherein the command script (112) is received using chunked transfer encoding.

11. The method (200) of claim 1, wherein the secure channel session (106) is established via hypertext transfer protocol secure (HTTPS) or constrained application protocol secure (CoAP).

12. A secure element (140) comprising a transmission buffer (150) configured to store a series of responses (130), wherein each response (130) from the series of responses (130) is generated after processing a corresponding remote management command (120) from a series of remote management commands (120) of a command script (112) received from a remote entity (110).

13. A system (100) comprising a secure element (140) and a remote entity (110) configured to be wirelessly coupled to the secure element (140), the secure element (140) configured to perform the steps of the method (200) according to claim 1.
